# EUROPEAN PATENT SPECIFICATION

(11) **EP 2 251 645 B1**
(45) Date of publication and mention of the grant of the patent: **15.04.2015**
(21) Application number: 09010465.4
(22) Date of filing: 13.08.2009
(51) Int. Cl.: G01D 4/00, H02J 3/14

(54) **Method and system for decentralized electricity metering**
Verfahren und System zur dezentralisierten Elektrizitätsmessung
Procédé et système pour mesurer l'électricité décentralisée

(30) Priority: 12.05.2009 EP 09006421
(43) Date of publication of application: 17.11.2010
(60) Divisional application: 15157711.1
(73) Proprietor: France Brevets, 75009 Paris (FR)
(72) Inventor: Rusitschka, Sebnem, 81543 München (DE)
(74) Representative: Hammes, Pierre

(56) References cited:
- EP-A1- 0 620 631
- EP-A2- 1 950 504
- WO-A1-2006/049356

## Description

The present invention is directed to a method for measuring electricity consumption and especially to a method for decentralized electricity metering. The present invention furthermore provides a corresponding system for decentralized electricity metering. The present invention furthermore provides a computer program being adapted to perform said method as well as a data carrier which stores such a computer program.

For increasing energy efficiency the consumption of energy and especially the consumption of electricity needs to be monitored and properly controlled. Therefore, commonly known methods apply so-called smart meters, which are digital means which typically replace analogue meters for measuring the consumption and controlling it. Smart meters are typically implemented as hardware units, which for instance measure electricity at the breaker box of a house. Measuring especially at the breaker box can be important for logging the entire household electricity consumption for billing purposes.

For measuring the electricity consumption of single devices commonly known methods apply a further intermediate device, which serves as electricity outlet, that can be plugged into a standard wall outlet to monitor the electricity consumption of a device or an electrical appliance. Hence, the energy consumption can also be logged over a specified period of time. Furthermore, software solutions are applied in commonly known methods for interacting with the hardware based smart meters.

Several smart meters can be arranged to form a smart grid. An electricity grid combines several smart meters forming an aggregate of multiple networks. Hence, communication and coordination among said smart meters can be established, which is accomplished manually according to commonly known methods.

Installing and maintenance of the introduced commonly known methods results in great effort and is furthermore time consuming. Said approaches require trained personal, which typically accomplishes installing and maintenance work at the site of the consumer, for instance at the consumer household. With increased complexity of the technical devices to be installed and to be configured errors and unreliabilities are more likely.

Furthermore product developments constantly introduce new products and updated versions of said products, which have to be adapted accordingly. Furthermore, known smart meters are not suitable for being integrated in existing systems. For instance, in a smart home scenario each technical device must be capable of communicating via a Home Area Network (HAN). The described functionality needs to be provided along with a possibility to control single devices as well as a plurality of devices as a whole and furthermore considering requirements of the devices. Requirements may be posed towards certain electricity quality parameters. Electronic devices must be protected against jittering, overvoltage, undervoltage, brownouts and/or blackouts. For joint communication among smart meters and coordination of said smart meters conventional methods apply a communication infrastructure typically based on physical cables. This also increases the effort for installing and maintenance work.

Furthermore commonly known methods do not consider consumer preferences, which allows consumers to configure time slots and priorities of the electricity consumption of single devices.

Reference EP Patent Publication No. 0620631 discloses a central unit that drives a plurality of appliances with encoded signals enabling them to operate, according to a programmed sequence. Each appliance comprises a CPU driving the central unit with enquiry signals which are indicative of the power demanded to perform the next working phase of the selected program. The central unit responds to the enquiry signals by driving with the enabling signals those appliances whose contemporary actuation during the concurrence of the respective next working phases involves a total power consumption not exceeding a maximum value.

Reference EP Patent Publication No. 1950504 discloses a system for controlling multiple air conditioners. The system includes a demand control unit configured to calculate an estimated power amount to be used by the multiple air conditioners based on an amount of power consumed by the multiple air conditioners during a predetermined time period, and to forcibly control an operation rate of one or more air conditioners based on a priority level assigned to the one or more air conditioners.

Reference WO Publication No. 2006/049356 discloses a management system for in-house power consumption, more particularly a management system for in-house power consumption efficiently performing in-house power consumption by means of estimating power consumption of each operation of in-house electric devices. The invention provides a management system for in-house power consumption comprising: at least one or more electric devices which comprise a communication means and transmit current operation information via the communication means on a given network, an power sensor module that measures an instantaneous power consumption of the total electric devices and transmit it on the network, and a power consumption controller that saves a previously received the operation information and the instantaneous power consumption and estimates the power consumption of each electric device on the basis of the saved operation information and instantaneous power consumption and the currently received operation information and instantaneous power consumption.

It is therefore an object of the present invention to provide a method and a system for decentralized electricity metering, which allows for increased energy efficiency and furthermore for considering consumer defined preferences according to a fine grained configurable electricity provision metric.
The object of the present invention is achieved by a method for decentralized electricity metering according to patent claim 1.

The invention provides a method for decentralized electricity metering. The method comprises the following steps: Generating at least one compound electricity request is accomplished in response to electricity requests, each electricity request being provided by an electronic device, and serving the compound electricity request is performed as a function of a configurable electricity provision metric.

Electricity requests may for instance be posed by devices of a household. For instance a first device requires a certain amount of electricity to be operated and therefore requests a certain amount of electricity or power. The electricity request is accomplished in a country specific unit of measurement. The electricity request can also be measured by a sensor which measures the power consumption of the device, with regard to several operating modes. It is also possible to determine said electricity request by a calculation or a look-up in a database. The person skilled in the art appreciates further possibilities to determine the exact amount of the electricity request of each of the single devices. By considering single electricity requests it is therefore possible to determine each of the power requirements of the single devices instead merely being able to consider compound electricity requests. Nevertheless it is also possible to consider both, a single electricity request as well as a compound electricity request.

A compound electricity request may for instance be the sum or result of a plurality of electricity requests. For instance it is possible to determine each of the single electricity requests of a household, to evaluate these electricity requests, e.g. by summing them up and hence determine the compound electricity request. The compound electricity request may for instance be a power consumption of a whole household at a single moment or in a specified period of time.

The compound electricity request may furthermore consider electricity requests of several consumers, for instance of several households. The electricity requests of several households can in a possible embodiment be summed-up to form a compound electricity request. Hence, it is possible to form clusters of households, each cluster posing one compound electricity request. It may be of advantage to consider several households in one city to form one consumer cluster. Electricity is provided by either a power plant or by a household which is able to supply current, for instance, by operating solar cells. Based on the compound electricity request or the plurality of compound electricity requests the configurable electricity provision metric is able to serve each of the clusters or each of the consumers with a specific amount of electricity or power.

The configurable electricity provision metric may for instance be implemented as a peer-to-peer network, which allows to monitor and to control the energy consumption of clusters and/or consumers. The peer-to-peer network can for example be formed to comprise a variety of in house devices, which communicate with a central control unit, for instance a PC. The communication is preferably implemented by a wireless technique, for instance WLAN, which allows scalability of the number of participating devices as well as an integration of devices according to the suggested method and system into existing infrastructures. The wireless communication is also easy to be implemented, as no physical cables are required for communication and control among devices and the control unit.

The configurable electricity provision metric may provide electricity according to several parameters. Said parameters can be automatically determined for instance over the world-wide web, or can also be configured by user behaviour in the household. The user behaviour may for instance indicate that it is possible to operate specific devices at night, while other specific devices have to be operated at day time. The configurable electricity provision metric is hence able to control devices, for instance as a function of determined user behaviour. It may also be of advantage to provide priority levels, which privilege important devices. It may happen that a formerly available power supply can no longer be provided because of a breakdown of a power plant. Hence, provision of electricity involves more effort and is therefore limited to said privileged devices. It may also be of advantage to specify further parameters, which serve as basis for determining priority levels.

Consequently it is possible to supply electricity to single devices, to consumers such as households and/or to consumer clusters as a function of a configurable electricity provision metric. Such a configurable electricity provision metric can also comprise a dynamic threshold for electricity provision. This may include a negotiation of electricity provision parameters. This allows for a dynamic adaption of provision and consumption of electricity.

In an embodiment of the present invention the electricity request specifies an energy or power being required for operating the electronic device.

This provides the advantage, that the electricity request can be empirically and dynamically specified.

This has the advantage, that for instance one household can be analysed under consideration of single electricity requests, which allows the analysis of a detailed power consumption of single households, especially for billing purposes.

In yet a further embodiment the present invention several consumers form a consumer cluster.

This has the advantage, that the power consumption of several consumers, for instance several households of a city, can be analysed and mutually compared.

In yet a further embodiment of the present invention the compound electricity request is calculated for each consumer cluster in response to the compound requests of the consumers.

This provides the advantage, that a compound electricity request can be calculated for each of the consumer clusters.

In yet a further embodiment of the present invention at least one electricity request comprises at least one of a group of request priority information, said group comprising: a time interval, a time stamp, a priority level, an electricity cost parameter and a dynamic priority information.

This has the advantage, that several parameters of single devices can be considered by the configurable electricity provision metric.

In yet a further embodiment of the present invention the configurable electricity provision metric specifies at least one request priority information.

This has the advantage, that a hierarchy of devices and their importance can be specified, for instance as a function of a user behaviour.

In yet a further embodiment of the present invention the configurable electricity provision metric specifies at least one of a group of electricity quality parameters, said group comprising: an overvoltage, an undervoltage, a jittering, a brownout and a blackout.

This provides the advantage, that the configurable electricity provision metric can also consider quality parameters, which are to be fulfilled for certain devices.

In yet a further embodiment of the present invention the at least one compound electricity request is served partially up to a provided degree of requested electricity.

This has the advantage, that for instance a consumer cluster can be served at a prescribed percentage of available electricity. Furthermore this provides the advantage that an operating mode of a device, such as a dimming functionality of a light, can be controlled by the served electricity provision.

The object of the present invention is also achieved by a system for decentralized electricity metering, according to patent claim 10.

Therefore, a system for decentralized electricity metering, especially for accomplishing one of the afore-mentioned methods, is provided. The system comprises at least one compound electricity sensor for generation of at least one compound electricity request in response to electricity requests, each electricity request being providing by an electronic device.

The system furthermore comprises at least one control unit for serving the compound electricity request as a function of a configurable electricity provision metric.

The compound electricity sensor can provide sockets in which the electronic devices are plugged in. Nevertheless the compound electricity sensor is able to identify the single power consumptions of each of the devices. The system may furthermore comprise a power quality measurement unit which can in a possible embodiment be integrated in the compound electricity sensor. The compound electricity sensor is hence arranged to provide the devices with electricity of a predefined quality, in case that electricity of the requested quality is available.

The compound electricity sensor and the control unit can in an embodiment communicate over a wireless network, the wireless network comprising further components, required for operating said network. The compound electricity sensor and/or the control unit can furthermore communicate with a data base or with the world-wide web for receiving parameters being required to meter and control the connected devices. Such parameters may for instance comprise electricity quality parameters or priority information regarding the operation of the devices.

In an embodiment of the present invention the compound electricity sensor is arranged to evaluate a single electricity request of at least one electronic device.

This has the advantage, that the compound electricity sensor is arranged to measure single electricity requests, as well as compound electricity requests.

This has the advantage, that the compound electricity request can be calculated according to a variety of approaches.

In yet a further embodiment of the present invention the compound electricity sensor provides the control unit with at least one of a group of request parameters, said group comprising: the single electricity request and the compound electricity request. The exchange of parameters may also comprise other parameters, which can for example be required for operating the network.

This provides the advantage, that the control unit can implement the configurable electricity provision metric as a function of the single electricity request and/or the compound electricity request.

In yet a further embodiment of the present invention the compound electricity sensor comprises a power quality measurement unit for measuring at least one electricity quality parameter of available electricity.

This has the advantage, that quality parameters can be dynamically sensed by a sophisticated power quality measurement unit.

In yet a further embodiment of the present invention a plurality of compound electricity requests provided by a plurality of control units is served as a function of the stored configurable electricity provision metric.

This has the advantage, that several compound electricity requests, for instance being posed by a consumer, a consumer cluster and/or several consumer clusters can be served dynamically according to the stored configurable electricity provision metric. Hence, a dynamic provision of electricity can be implemented.

In yet a further embodiment of the present invention the stored configurable electricity provision metric specifies an electricity supply for at least one device.

This has the advantage, that also single devices can be provided with electricity. This allows a fine grained provision of electricity also for single devices.

The invention furthermore provides a computer program being adapted to perform the afore-mentioned method as well as a data carrier, which stores said computer program.

Hence a method and a system for decentralized electricity metering is introduced, which allows for a dynamic metering and provision of electricity consumption on several granularity levels, which can be easily implemented without great effort.

In the following possible embodiments of the method and the system for decentralized electricity metering are described with reference to the enclosed figures.
- Fig. 1: shows a flow diagram of a method for decentralized electricity metering according to an aspect of the present invention;
- Fig. 2: shows a detailed flow diagram of a method for decentralized electricity metering according to an aspect of the present invention;
- Fig. 3: shows a block diagram of a system for decentralized electricity metering according to an aspect to the present invention;
- Fig. 4: shows a detailed block diagram of a system for decentralized electricity metering according to an aspect of the present invention;
- Fig. 5: shows an application scenario of a method for decentralized electricity metering according to an aspect of the present invention; and
- Fig. 6: shows a further application scenario of a method of decentralized electricity metering of consumer clusters according to an aspect of the present invention.

In the further description of the figures the same aspects are denoted with the same reference signs if not indicated otherwise.

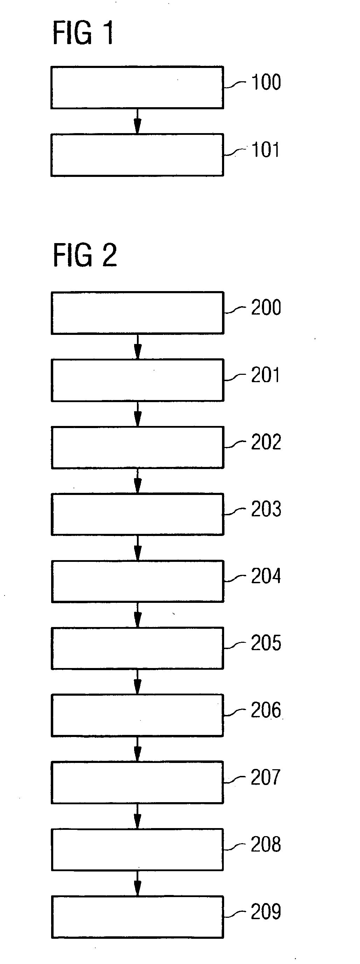

Fig. 1 shows a flow diagram of a method for decentralized electricity metering. The method comprises the following steps:
   In a first step 100 the generation of at least one compound electricity request is performed in response to electricity requests, each electricity request being provided by an electronic device. The electronic device can e.g. be a device in a household such as a refrigerator. The electronic device can also be a machine of a manufacturing factory.
   In a final step 101 serving the compound electricity request is performed as a function of a configurable electricity provision metric.
Fig. 2 shows a detailed flow diagram of a method for decentralized electricity metering according to an aspect of the present invention, comprising the following steps:
   In a first step 200 at least one electricity request is determined. Determining the electricity request can comprise further substeps such as measuring the power consumption of an electronic device for instance by an intermediate device being arranged between a socket and the electronic device. These steps may be performed iteratively, which provides single electricity requests of several devices, for instance of a household. Furthermore, it is possible to derive the electricity requests for instance from a specification provided by a producer of said electronic device. The single electricity request can be a certain amount of electric current or power being required to operate the electronic device in a specific operation mode. For running said electronic device it may be of advantage to provide electricity at a specific quality, e.g. with a stable AC frequency.

It may happen, that an electronic device is destroyed or not working properly in case of an overvoltage or an undervoltage is applied to said electronic device.

Therefore, in a subsequent step 201 electricity quality parameters of each of the electronic devices are determined. Such a electricity quality parameter can be, that electricity has to be provided at a certain voltage or frequency.
For operating the electronic devices properly in an embodiment the available quality of electricity is measured. This is performed in a subsequent step 202. A measuring unit can for instance measure or calculate electricity quality parameters at a power socket, which provides electricity for the electronic devices. For doing so a power quality measurement unit can be provided. Said power quality measurement unit can for instance be integrated in a compound current sensor. The electronic devices can be supplied with electricity or power via the compound current sensor, which in turn is supplied with electricity or power by said power socket. The person skilled in the art may appreciate further approaches for measuring the available power quality or the available quality of the supplied electricity.

In a further subsequent step 203 the compound electricity request is determined for instance by evaluating the determined electricity requests as determined in step 200, e.g. by summing up requests. Determining the compound electricity request may also take into account the determined quality parameters towards the provision of the electricity, as being determined in step 201.

As electricity requirements as well as the available electricity have been detected in the afore-mentioned steps, a configurable electricity provision metric is applied in the subsequent steps. Therefore a network, formed for instance by a peer-to-peer network or a client/server network, can be built-up. This is accomplished in step 204. Building such a network involves connecting the compound current sensor with the control unit, e.g. by controlling switching units. Building-up the network in step 204 typically comprises several substeps such as applying network protocols, handshaking and/or the assignment of addresses, for instances IP addresses. The person skilled in the art appreciates further approaches for building-up a network which can be applied in step 204.

In a subsequent step 205 a look-up of consumer preferences or device parameters is accomplished. For instance it can be defined or configured, that a washing machine can be operated at night, because electricity costs are typically lower at night compared with electricity costs at day time. A technical specification of an electronic device may furthermore indicate that an electronic device needs to be operated constantly. For instance a refrigerator needs to be operated constantly or at least with breaks each lasting a maximum of one hour. The look-up as being accomplished in step 205 can in a possible embodiment comprise communication with a data base or a device specification. Alternatively operating parameters can be calculated or measured. It is for instance possible to read out a sensor, which is arranged inside or integrated in a refrigerator for determining device parameters.

It may also be the case, that further parameters are required for operating single devices. These parameters are determined in step 206. In step 206 a read out of electricity cost parameters from a storage device and/or from a network, such as the world-wide web can be performed.

For controlling the electronic devices a configurable electricity provision metric is provided in step 207. The configurable electricity provision metric may for example define that in case that at a certain time period electricity is expensive and therefore only privileged electronic devices are operated during this time period. The parameters as determined in step 205 and/or in step 206 may be interpreted by the provided configurable electricity provision metric. The provided configurable electricity provision metric can also take into consideration that households can produce electricity on their own. For instance solar cells can be operated by a household and consequently this household requires less electricity from a powerplant via the grid. In a possible embodiment metrics are provided, which privilege specific consumers such as hospitals or airports.

The metric can be stored locally or accessible via a data network such as the internet. In an embodiment several consumers or several clusters of consumers negotiate an access to the available electricity or power. Hence, a dynamic re-configuration of said configurable electricity provision metric can be performed in step 208. The dynamic reconfiguration of said configurable electricity provision metric provides stability of the electricity network, as even in case of a blackout of parts of the power network or grid the supplying of electricity can be dynamically reconfigured. Furthermore electricity consuming devices, consumers and/or clusters can be added or removed, which results in an automatic reconfiguration of the configurable electricity provision metric. Hence, the operator of said electricity network invests a minimum of effort for maintenance of said electricity network.

In a final step 209 the electronic devices, consumers and/or clusters of consumers are served with a certain amount of electricity as being defined in the configurable electricity provision metric. Hence, selected electronic devices are supplied with electricity or is scheduled to be supplied with electricity or power at a certain point of time or time interval.

The afore-mentioned steps 200-209 may be performed iteratively and/or in different order.

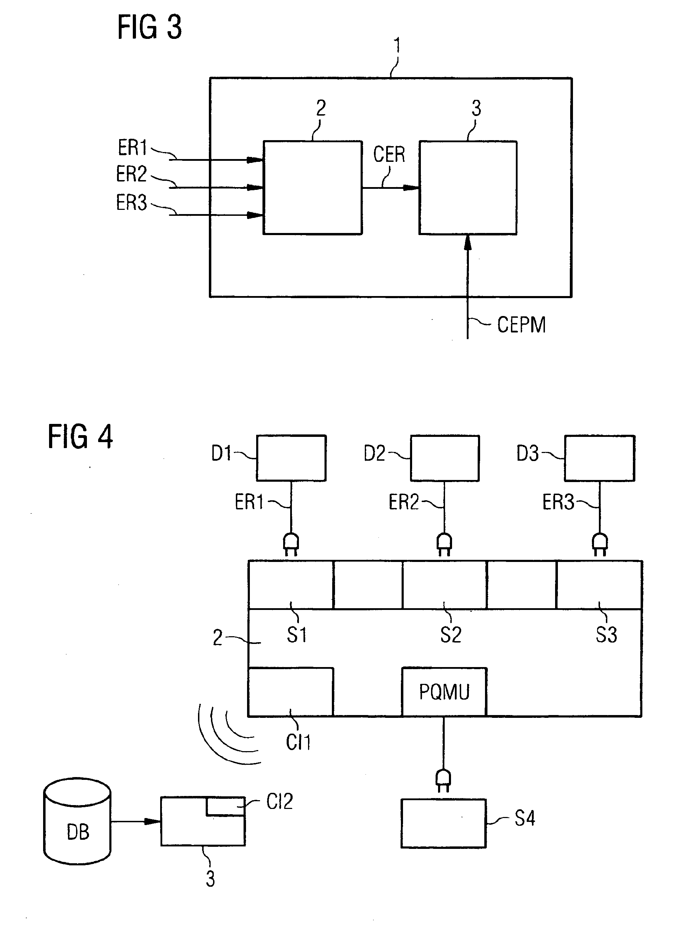

Fig. 3 shows a block diagram of a system 1 for decentralized electricity metering, especially for accomplishing the afore-mentioned method. The system 1 for decentralized electricity metering comprises at least one compound electricity sensor 2 for generation of at least one compound electricity request CER in response to electricity requests ER1, ER2, ER3, each electricity request ER1, ER2, ER3 being provided by an electronic device D1, D2, D3 such as a machine or household consumer device.

The system 1 for decentralized electricity metering further comprises at least one control unit 3 for serving the compound electricity request CER as a function of a stored or loaded configurable electricity provision metric CEPM.

Fig. 4 shows a detailed block diagram of a system 1 for decentralized electricity metering according to an embodiment of the present invention.

In the present embodiment, as shown in Fig. 4, the electronic devices D1, D2, D3 request electricity from an electric socket S4. According to an aspect of the present invention a compound electricity sensor 2 is arranged between said electronic devices D1, D2, D3 and said socket S4. The compound electricity sensor 2 is adapted to measure single electricity requests ER1, ER2, ER3 as well as designed to measure the compound electricity request CER, which can be the sum of the single electricity request ER1, ER2, ER3. In a possible scenario the device D1 requires two-thirds of the compound electricity request CER, the electronic device D2 requires one-third of the compound electricity request CER and the electronic device D3 is switched-off and therefore requires no electricity at all.

In the present embodiment, the compound electricity sensor 2 provides three electricity sockets S1, S2, S3 in which the electronic devices D1, D2, D3 are plugged in and hence receive electricity from the socket S4 over the compound electricity sensor 2. The compound electricity sensor 2 is furthermore arranged to measure the quality of the electricity or power supply signal provided from the socket S4. Therefore a power quality measurement unit PQMU is integrated in the compound electricity sensor 2. The power quality measurement PQMU is arranged to measure jitter or frequency shifts, overcurrents, undercurrents, overvoltages, undervoltages, brownouts as well as blackouts of the electricity provided via the socket S4 from the electricity grid.

The system 1 for decentralized electricity metering furthermore comprises a control unit 3, which regulates the electricity or current supplied to the compound electricity sensor 2 and furthermore the electricity for the sockets S1, S2, S3 and therefore for the devices D1, D2, D3.

The control unit 3 may for instance be integrated in the compound electricity sensor 2 or alternatively it may communicate with the compound electricity sensor 2 without being integrated in said compound electricity sensor 2. For communication of the compound electricity sensor 2 and the control unit 3 each of the units, namely the compound electricity sensor 2 as well as the control unit 3, comprises a communication interface. In the present embodiment a communication interface CI1 is integrated in the compound electricity sensor 2 and a communication interface CI2 as integrated in the control unit 3.

The control unit 3 communicates with a data base DB for receiving the configurable electricity provision metric CEPM over a data network. The network may also be formed by means of communication interfaces. Generally the communication can be performed via a wireless connection or via a physical cable or wire. It may be of advantage to apply WLAN communication, as WLAN communication is scalable and can be implemented without great effort.

The control unit 3 has access to further electricity parameters, which for instance describe cost values of electricity or which specify a priority of the devices D1, D2, D3. The priority allows the configurable electricity provision metric CEPM to serve single electricity requests ER1, ER2, ER3 according to their relevance and/or their operation mode.

By granting single electricity requests ER1, ER2, ER3 or compound electricity requests CER the control unit 3 is able to determine or control the operation mode of the electronic devices D1, D2, D3. For instance a dimming functionality of a light D1 can be controlled by provision of only a certain degree of the requested single electricity request ER1.

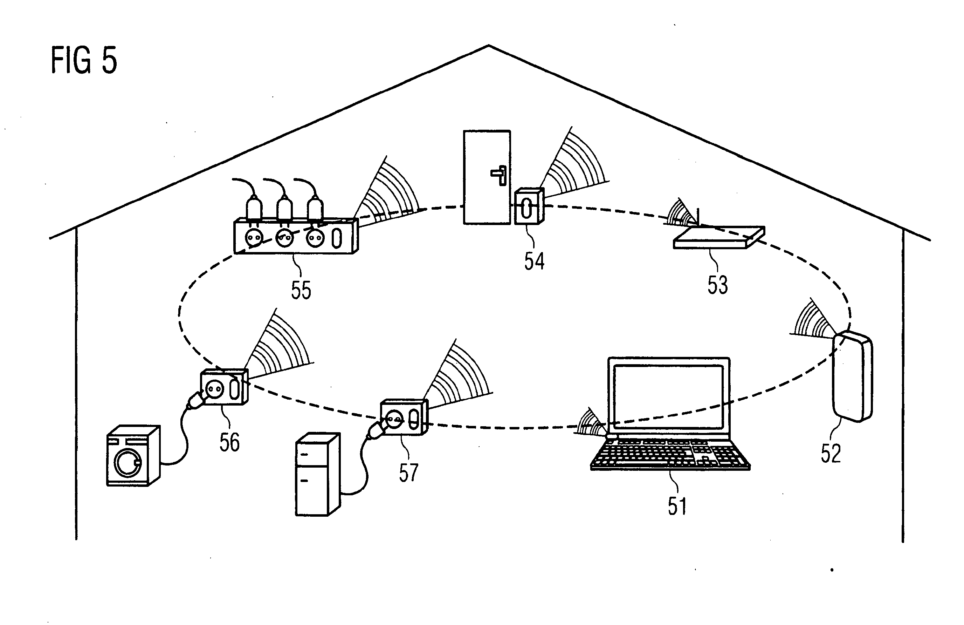

Fig. 5 shows an application scenario of the method for decentralized electricity metering according to an aspect of the present invention.

The embodiment as shown in Fig. 5 describes a household, which comprises a variety of devices. For a more intuitive understanding of the involved units an overview of the reference signs is given as follows:

| Reference signs of Fig. 5 | |
|---|---|
| 51 | Home PC |
| 52 | Mobile |
| 53 | Router |
| 54 | Smart meter at breaker box |
| 55 | Smart receptacle |
| 56 | Smart adapter plug |
| 57 | Smart adapter plug |

The household comprises several devices, which are arranged to perform electricity metering as well as electricity control steps. In the present embodiment each of the involved units communicate with each other for instance by a peer-to-peer network or alternatively by a client server architecture, which is indicated in the present Fig. 5 by the dashed line. The home PC 51 is for instance designed to visualize the network as demonstrated in the present Fig. 5. Interpreting the configurable electricity provision metric CEPM can be performed by the mobile device 52 and/or the router 53. The smart meter at the breaker box 54 may be arranged to calculate the compound electricity request CER of each of the devices. It may further be arranged to calculate the compound electricity request CER in response to information which is provided by the units 55, 56 and/or 57.
The socket 55 provides electricity to three further devices, for instance devices D1, D2, D3 and hence is able to measure the electricity requests ER1, ER2, ER3 of each of the plugged in electronic devices D1, D2, D3. The smart socket 55 may for instance calculate a first compound electricity request CER, which is also considered for calculation of an overall compound electricity request CER by the smart meter at the breaker box 54.

An electricity request can also be posed by further sockets, such as the sockets 56 and/or 57.

In the present embodiment it may be of advantage to consider a single electricity request of the home PC 51 and furthermore apply the configurable electricity provision metric CEPM by the same home PC 51. The configurable electricity provision metric CEPM may can be stored on said home PC 51. Hence the home PC 51 acts as one of the devices posing single electricity requests as well as the control unit 3 as shown in Fig. 3. It may also be of advantage, that the home PC 51 communicates with an electricity supplier for determining the costs of the electricity at certain points of time. Hence the home PC 51 is able to assign electric currents or power to the sockets 55, 56, 57.

Further electronic devices can be added to the described infrastructure without any further efforts. Once a further electronic device is added or connected to said infrastructure it registers at the home PC 51.

It is possible, that a further electronic device does not consume electricity, but provides electricity for the infrastructure depicted in Fig. 5. Also electricity supplying devices can be integrated in the peer-to-peer infrastructure, as shown in Fig. 5. Hence a self-organizing infrastructure is provided according to an aspect of the present invention with regard to monitoring and consumption of electricity, which allows for an increased electricity efficiency.

In a further embodiment of the present invention a smart adapter plug 56 is connected to a washing machine and a further smart adapter plug 57 is connected to a refrigerator. The smart meter at the breaker box 54 recognizes the available input electricity. This means that the smart meter at the breaker box 54 is able to measure the electricity and its quality being available for operating the washing machine and the refrigerator. The available electricity has to be shared for operating the electronic devices of a household, especially the washing machine and the refrigerator.

The smart meter at the breaker box 54 provides a metric, which is able to assign electronic devices a specific current, which is required to operate said devices. Each of the devices transmits an electricity request to the smart meter at the breaker box 54. This may be performed explicitly by transmitting said electricity request over a WLAN network or this may be accomplished implicitly by consuming the electricity. In a second case the electricity request is hence posed by means of a consumed amount of electricity, which can be measured, for instance by the smart meter at the breaker box 54. As only a specific amount of electricity may be available for operating the washing machine and the refrigerator, the smart meter at the breaker box 54 is configured by an electricity provision metric CEPM. The electricity provision metric CEPM configures the smart meter at the breaker box 54 such that only devices of high importance are operated, in case not enough electricity for operating all devices is available.

In the present embodiment the washing machine is assigned a lower priority than the refrigerator. Said priorities may be defined in the electricity provision metric CEPM. As in the present embodiment only electricity for serving one electricity request is available the electricity provision metric CEPM serves only the electricity request of the refrigerator, as the refrigerator holds a higher priority level than the washing machine. Hence, the smart meter at the breaker box 54 serves only the electricity request of the refrigerator being posed by the smart adapter plug 57.

It may be the case that an additional device, for instance a home PC 51 is switched on and therefore a further electricity request is posed by the home PC 51. Hence, the smart meter at the breaker box 54 checks the priority level of the home PC 51. In case the priority of the home PC 51 is higher than the priority of the refrigerator the electricity provision metric CEPM dynamically switches the electricity provision away from the refrigerator and serves the electricity request of the home PC 51. The smart meter at the breaker box 54 recognizes the switching off of the home PC 51, as the home PC 51 transmits its electricity request to the smart meter at the breaker box 54, for instance by a wireless network. Hence, a self-configurating network of electricity consuming devices is established, which can be configured according to the electricity provision metric CEPM.

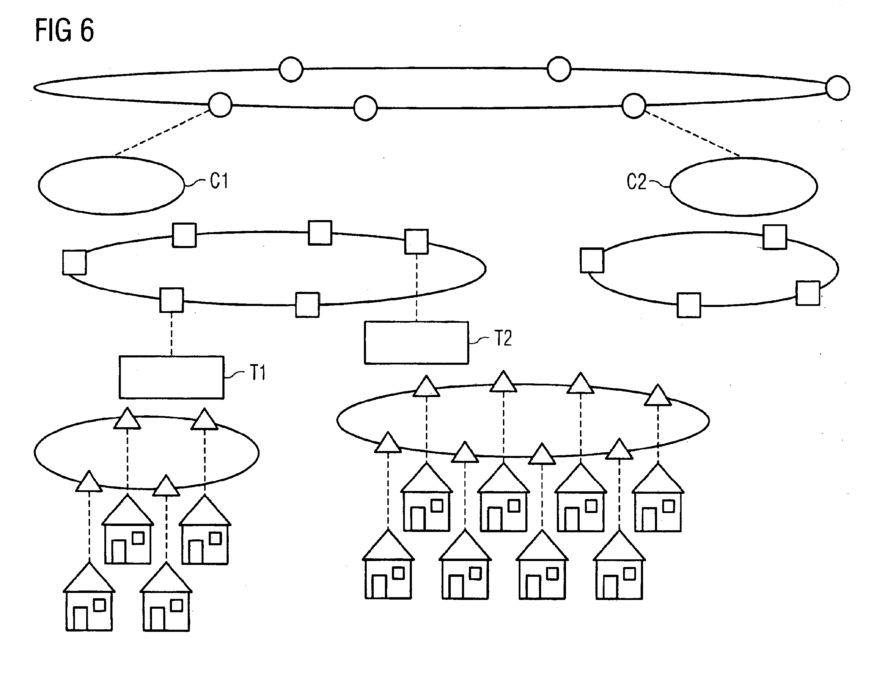

Fig. 6 shows an application scenario of a method for decentralized electricity metering according to an aspect of the present invention.

In the present embodiment several households, also referred to as consumers, are clustered in consumer clusters. It can be advantageous to define, that a first town T1, for instance Munich, forms one consumer cluster. It is also possible to form several sub-clusters summarizing parts of Munich, which are sharing the provided electricity. Hence, different levels of clusters, such as a first cluster T1 for Munich, a second cluster T2 for Berlin, as well as further clusters for instance describing countries C1 and C2 can be formed. Hence a hierarchy of self organizing clusters can be implemented.

It may happen, that the first town Munich T1 does not have sufficient electricity available. In case the second town Berlin T2 produces more electricity than is needed for operating the devices being summarized in the cluster T2, the configurable electricity provision metric CEPM may define, that the compound electricity requests CER demanded by a first town T1 Munich are served by electricity generated by the second cluster T2.

The configurable electricity provision metric CEPM may furthermore define that not enough electricity for both of the towns T1 and T2 can be supplied. Hence, the metric may define, that both compound electricity requests of Munich T1 and Berlin T2 can only be served in the evening hours or at night. Hence the configurable electricity provision metric CEPM schedules the compound electricity requests CER of Munich T1 and Berlin T2.

Hence breakdowns of powerplants e.g. in Munich T1 can be compensated by a provision of electricity from the second town T2. Furthermore the configurable electricity provision metric CEPM may define, that a certain kind of devices in Berlin T2 is only operated at night, for granting the saved electricity or power for privileged devices in Munich T1. Hence, necessary devices can be switched off and safety relevant devices, for instance being operated in hospitals, can be operated with the saved electricity.

In the present embodiment the different clusters on the different levels of the hierarchy form a peer-to-peer network, which can be dynamically scaled and is stable with regard to the provision of a basic level of electricity for privileged devices.

## Claims

1. A method for decentralized electricity metering, comprising the steps of:
- generating (100) at least one compound electricity request (CER) in response to electricity requests (ER1; ER2; ER3), each electricity request (ER1; ER2; ER3) being provided by an electronic device (01; 02; 03) or by a measurement from a sensor or by a calculation or a look-up in a database, said compound electricity request (CER) comprising a single electricity request or the sum of a plurality of electricity requests and being determined according to at least one of a group of determination procedures, said group comprising: a calculation, a measuring, an estimation, a sensing, a summing of said electricity requests (ER1; ER2; ER3) and a read-out from a storage device ; and
- defining a configurable electricity provision metric (CEPM), comprising a configurable amount of electricity to be served to a consumer,
- serving at least one electronic device (01; 02; 03) with an amount of electricity as defined in said configurable electricity provision metric (CEPM),
the method being **characterized in that** each compound electricity request (CER) is provided by one consumer comprising at least one electronic device (01, 02, 03).

2. The method according to claim 1, wherein each electricity request (ER1; ER2; ER3) specifies an energy required for operating the electronic device (01; 02; 03).

3. The method according to claims 1 to 2, wherein several consumers form a consumer cluster.

4. The method according to claim 3, wherein the compound electricity request (CER) is calculated for each consumer cluster in response to the compound requests of the consumers.

5. The method according to claims 1 to 4, wherein at least one electricity request comprises at least one of a group of request priority information, said group comprising: a time interval, a timestamp, a priority level, an electricity parameter, an electricity cost parameter, and a dynamic priority information.

6. The method according to claim 5, wherein the configurable electricity provision metric (CEPM) comprises priority information regarding consumers to be served and/or electricity cost

7. The method according to claim 6, wherein a plurality of electronic devices (01 ;02;03) are grouped to form a self-configurating network of devices in which any device can be switched on and the amount of electricity served to the self-configurating network of devices is dynamically configured according to the configurable electricity provision metric.

8. The method according to claims 1 to 7, wherein the configurable electricity provision metric (CEPM) comprises at least one of a group of electricity quality parameters, said group comprising: an overvoltage, an undervoltage, a jittering, a brownout and a blackout.

9. The method according to claims 1 to 8, wherein each of electricity request (ER1 ;ER2;ER3) is served partially up to a certain degree of requested electricity.

10. A system (1) for decentralized electricity metering, especially for accomplishing the method of claims 1 to 9, comprising:
- at least one compound electricity sensor (2) for generation of at least one compound electricity request (CER) in response to electricity requests (ER1; ER2; ER3), each electricity request (ER1; ER2; ER3) being provided by an electronic device (01; 02; 03) or by a measurement from a sensor or by a calculation or a look-up in a database, said compound electricity request (CER) comprising a single electricity request or the sum of a plurality of electricity requests and being determined according to at least one of a group of determination procedures, said group comprising: a calculation, a measuring, an estimation, a sensing, a summing of said electricity requests (ER1; ER2; ER3) and a read-out from a storage device ; and
- at least one control unit (3) for
defining a configurable electricity provision metric (CEPM)comprising a configurable amount of electricity to be served to a consumer and
serving at least one electronic device (01; 02; 03) with an amount of electricity as defined in said configurable electricity provision metric (CEPM),
, the system being **characterized in that** each compound electricity request (CER) is provided by one consumer comprising at least one electronic device (01, 02, 03).

11. The system (1) according to claim 10, wherein the compound electricity sensor (2) is arranged to evaluate the electricity request (ER1; ER2; ER3) of at least one electronic device (01; 02; 03).

12. The system (1) according to claims 10 to 11, wherein the compound electricity sensor (2) provides the control unit (3) with at least one of a group of request parameters, said group comprising: the electricity request (ER1; ER2; ER3) and the compound electricity request (CER).

13. The system (1) according to claims 10 to 12, wherein the compound electricity sensor (2) comprises a power quality measurement unit (PQMU), for measuring at least one electricity quality parameter of available electricity being taken among an overvoltage, an undervoltage, a jittering, a brownout and a blackout.

14. The system (1) according to claims 10 to 13 wherein said compound electricity sensor (2) is a smart meter or a smart socket.

15. The system (1) according to claims 10 to 14 also comprising a mobile device or a router adapted to interpret the configurable electricity provision metric.

16. The system (1) according to claims 10 to 15 wherein said electronic device (01 ;02;03) is a smart adapter plug or a household device, for example a refrigerator, or a home PC.

17. The system (1) according to claims 10 to 16 wherein said compound electricity sensor (2) comprises a first communication interface (CI1), said control unit (3) comprises a second communication interface (CI2), the communication between first and second communication interfaces (CI1,CI2) being performed via a wireless connection or a physical cable or wire.

18. A computer program being adapted to perform the method of claims 1 to 9 on a computer.

19. A data carrier which stores a computer program according to claim 18.

## Patentansprüche

1. Verfahren für dezentralisierte Elektrizitätsmessung, die folgenden Schritte umfassend:
- Erzeugen (100) von mindestens einer zusammengesetzten Elektrizitätsanforderung (CER) als Antwort auf Elektrizitätsanforderungen (ER1; ER2; ER3), wobei jede Elektrizitätsanforderung (ER1; ER2; ER3) durch eine elektronische Einrichtung (01; 02; 03) oder durch eine Messung von einem Sensor oder durch eine Berechnung oder einen Lookup in einer Datenbank bereitgestellt wird, wobei die zusammengesetzte Elektrizitätsanforderung (CER) eine einzelne Elektrizitätsanforderung oder die Summe einer Vielzahl von Elektrizitätsanforderungen umfasst und gemäß mindestens einer in einer Gruppe von Bestimmungsprozeduren bestimmt wird, wobei die Gruppe Folgendes umfasst: eine Berechnung, eine Messung, eine Schätzung, eine Abtastung, eine Summierung der Elektrizitätsanforderungen (ER1; ER2; ER3) und eine Ablesung von einer Speichereinrichtung; und
- Definieren einer konfigurierbaren Elektrizitätslieferungsmetrik (CEPM), eine konfigurierbare Menge von Elektrizität umfassend, mit der ein Konsument versorgt werden soll,
- Versorgen mindestens einer elektronischen Einrichtung (01; 02; 03) mit einer Menge von Elektrizität, wie in der konfigurierbaren Elektrizitätslieferungsmetrik (CEPM) definiert ist,
wobei das Verfahren **dadurch gekennzeichnet ist, dass** jede zusammengesetzte Elektrizitätsanforderung (CER) von einem Konsumenten bereitgestellt wird, der mindestens eine elektronische Einrichtung (01; 02; 03) umfasst.

2. Verfahren nach Anspruch 1, worin jede Elektrizitätsanforderung (ER1; ER2; ER3) eine Energie spezifiziert, die zum Betreiben der elektronischen Einrichtung (01; 02; 03) erforderlich ist.

3. Verfahren nach einem der Ansprüche 1 bis 2, worin mehrere Konsumenten einen Konsumentencluster bilden.

4. Verfahren nach Anspruch 3, worin die zusammengesetzte Elektrizitätsanforderung (CER) für jeden Konsumentencluster als Antwort auf die zusammengesetzten Anforderungen der Konsumenten berechnet wird.

5. Verfahren nach einem der Ansprüche 1 bis 4, worin mindestens eine Elektrizitätsanforderung mindestens eine einer Gruppe von Anforderungsprioritätsinformation umfasst, wobei die Gruppe Folgendes umfasst: ein Zeitintervall, einen Zeitstempel, einen Prioritätsgrad, einen Elektrizitätsparameter, einen Elektrizitätskostenparameter und eine dynamische Prioutätsinformation.

6. Verfahren nach Anspruch 5, worin die konfigurierbare Elektrizitätslieferungsmetrik (CEPM) Prioritätsinformation umfasst, die zu versorgende Konsumenten und/oder Elektrizitätskosten betrifft.

7. Verfahren nach Anspruch 6, worin eine Vielzahl von elektronischen Einrichtungen (01; 02; 03) gruppiert sind, um ein selbstkonfigurierendes Netz von Einrichtungen zu bilden, in dem irgendeine Einrichtung eingeschaltet werden kann, und die Menge von Elektrizität, mit der das selbstkonfigurierende Netz von Einrichtungen versorgt werden soll, gemäß der konfigurierbaren Elektrizitätslieferungsmetrik dynamisch konfiguriert wird.

8. Verfahren nach einem der Ansprüche 1 bis 7, worin die konfigurierbare Elektrizitätslieferungsmetrik (CEPM) mindestens einen einer Gruppe von Elektrizitätsqualitätsparametern umfasst, wobei die Gruppe Folgendes umfasst: eine Überspannung, eine Unterspannung, ein Jittering, einen leichten Spannungseinbruch und einen völligen Stromausfall.

9. Verfahren nach den Ansprüchen 1 bis 8, worin jede der Elektrizitätsanforderungen (ER1; ER2; ER3) teilweise bis zu einem bestimmten Grad mit angeforderter Elektrizität versorgt wird.

10. System (1) für dezentralisierte Elektrizitätsmessung besonders zum Realisieren des Verfahrens nach den Ansprüchen 1 bis 9, Folgendes umfassend:
- mindestens einen zusammengesetzten Elektrizitätssensor (2) zum Erzeugen von mindestens einer zusammengesetzten Elektrizitätsanforderung (CER) als Antwort auf Elektrizitätsanforderungen (ER1; ER2; ER3), wobei jede Elektrizitätsanforderung (ER1; ER2; ER3) durch eine elektronische Einrichtung (01; 02; 03) oder durch eine Messung von einem Sensor oder durch eine Berechnung oder einen Lookup in einer Datenbank bereitgestellt wird, wobei die zusammengesetzte Elektrizitätsanforderung (CER) eine einzelne Elektrizitätsanforderung oder die Summe einer Vielzahl von Elektrizitätsanforderungen umfasst und gemäß mindestens einer einer Gruppe von Bestimmungsprozeduren bestimmt wird, wobei die Gruppe Folgendes umfasst: eine Berechnung, eine Messung, eine Schätzung, eine Abtastung, eine Summierung der Elektrizitätsanforderungen (ER1; ER2; ER3) und eine Ablesung von einer Speichereinrichtung; und
- mindestens eine Steuerungseinheit (3) zum
Definieren einer konfigurierbaren Elektrizitätslieferungsmetrik (CEPM), eine konfigurierbare Menge von Elektrizität umfassend, mit der ein Konsument versorgt werden soll,
Versorgen mindestens einer elektronischen Einrichtung (01; 02; 03) mit einer Menge von Elektrizität, wie in der konfigurierbaren Elektrizitätslieferungsmetrik (CEPM) definiert ist,
wobei das System **dadurch gekennzeichnet ist, dass** jede zusammengesetzte Elektrizitätsanforderung (CER) von einem Konsumenten bereitgestellt wird, der mindestens eine elektronische Einrichtung (01; 02; 03) umfasst.

11. System (1) nach Anspruch 10, worin der zusammengesetzte Elektrizitätssensor (2) dazu angeordnet ist, die Elektrizitätsanforderung (ER1; ER2; ER3) mindestens einer elektronischen Einrichtung (01; 02; 03) auszuwerten.

12. System (1) nach einem der Ansprüche 10 bis 11, worin der zusammengesetzte Elektrizitätssensor (2) der Steuerungseinheit (3) mindestens einen einer Gruppe von Anforderungsparametern bereitstellt, wobei die Gruppe Folgendes umfasst: die Elektrizitätsanforderung (ER1; ER2; ER3) und die zusammengesetzte Elektrizitätsanforderung (CER).

13. System (1) nach einem der Ansprüche 10 bis 12,worin der zusammengesetzte Elektrizitätssensor (2) eine Leistungsqualitäts-Messeinheit (PQMU) umfasst, um mindestens einen Elektrizitätsqualitätsparameter von verfügbarer Elektrizität zu messen, der aus einer Überspannung, einer Unterspannung, einem Jittering, einem leichten Spannungseinbruch und einem völligen Stromausfall genommen wird.

14. System (1) nach einem der Ansprüche 10 bis 13, worin der zusammengesetzte Elektrizitätssensor (2) ein intelligentes Messgerät oder eine intelligente Steckdose ist.

15. System (1) nach einem der Ansprüche 10 bis 14, auch eine Mobileinrichtung oder einen Router umfassend, dazu angepasst, die konfigurierbare Elektrizitätslieferungsmetrik zu interpretieren.

16. System (1) nach einem der Ansprüche 10 bis 15, worin die elektronische Einrichtung (01; 02; 03) ein intelligenter Adapterstecker oder eine Haushaltseinrichtung ist, zum Beispiel ein Eisschrank oder ein Heim-PC.

17. System (1) nach einem der Ansprüche 10 bis 16, worin der zusammengesetzte Elektrizitätssensor (2) eine erste Kommunikationsschnittstelle (CI1) umfasst, die Steuerungseinheit (3) eine zweite Kommunikationsschnittstelle (CI2) umfasst, wobei die Kommunikation zwischen der ersten und der zweiten Kommunikationsschnittstelle (CI1, CI2) über eine drahtlose Verbindung oder ein physikalisches Kabel oder einen Draht ausgeführt wird.

18. Computerprogramm, das dazu angepasst ist, das Verfahren nach den Ansprüchen 1 bis 9 auf einem Computer auszuführen.

19. Datenträger, der ein Computerprogramm nach Anspruch 18 speichert.

## Revendications

1. Procédé pour une mesure décentralisée d'électricité, comprenant les étapes consistant à :
- générer (100) au moins une demande d'électricité composite (CER) en réaction à des demandes d'électricité (ER1 ; ER2 ; ER3), chaque demande d'électricité (ER1 ; ER2 ; ER3) étant fournie par un dispositif électronique (01 ; 02 ; 03) ou grâce à une mesure provenant d'un capteur ou grâce à un calcul ou une consultation d'une base de données, ladite demande d'électricité composite (CER) comprenant une demande unique d'électricité ou la somme d'une pluralité de demandes d'électricité et étant déterminée en fonction d'au moins une parmi un groupe de procédure de détermination, ledit groupe comprenant : un calcul, une mesure, une estimation, une détection, une addition desdites demandes d'électricité (ER1 ; ER2 ; ER3) et une lecture à partir d'un dispositif de stockage ; et
- définir un paramètre de fourniture d'électricité configurable (CEPM), comprenant une quantité configurable d'électricité à délivrer à un consommateur,
- délivrer une quantité d'électricité telle que définie dans ledit paramètre de fourniture d'électricité configurable (CEPM) à au moins un dispositif électronique (01 ; 02 ; 03),
le procédé étant **caractérisé en ce que** chaque demande d'électricité composite (CER) est fournie par un consommateur comprenant au moins un dispositif électronique (01, 02, 03).

2. Procédé selon la revendication 1, dans lequel chaque demande d'électricité (ER1 ; ER2 ; ER3) spécifie une énergie requise pour faire fonctionner le dispositif électronique (01 ; 02 ; 03).

3. Procédé selon la revendication 1 ou 2, dans lequel plusieurs consommateurs forment un groupement de consommateurs.

4. Procédé selon la revendication 3, dans lequel la demande d'électricité composite (CER) est calculée pour chaque groupement de consommateurs en réaction aux demandes composites des consommateurs.

5. Procédé selon l'une quelconque des revendications 1 à 4, dans lequel au moins une demande d'électricité comprend au moins une parmi un groupe d'informations sur la priorité de la demande, ledit groupe comprenant : un intervalle de temps, un horodatage, un niveau de priorité, un paramètre d'électricité, un paramètre de coût d'électricité, et une information de priorité dynamique.

6. Procédé selon la revendication 5, dans lequel le paramètre de fourniture d'énergie configurable (CEPM) comprend des informations de priorité concernant des consommateurs à livrer et/ou un coût d'électricité.

7. Procédé selon la revendication 6, dans lequel une pluralité de dispositifs électroniques (01 ; 02 ; 03) sont groupés pour former un réseau auto-configurant de dispositifs dans lequel n'importe quel dispositif peut être mis en marche et la quantité d'électricité délivrée au réseau auto-configurant de dispositifs est configurée de manière dynamique en fonction du paramètre de fourniture d'électricité configurable.

8. Procédé selon l'une quelconque des revendications 1 à 7, dans lequel le paramètre de fourniture d'électricité configurable (CEPM) comprend au moins un parmi un groupe de paramètres de qualité d'électricité, ledit groupe comprenant : une surtension, une sous-tension, une instabilité, une microcoupure et une panne d'électricité.

9. Procédé selon l'une quelconque des revendications 1 à 8, dans lequel chacune des demandes d'électricité (ER1 ; ER2 ; ER3) est honorée partiellement jusqu'à un certain niveau d'électricité demandée.

10. Système (1) pour une mesure décentralisée d'électricité, en particulier permettant de mettre en oeuvre le procédé selon l'une quelconque des revendications 1 à 9, comprenant :
- au moins un capteur d'électricité composite (2) pour une génération d'au moins une demande d'électricité composite (CER) en réaction à des demandes d'électricité (ER1 ; ER2 ; ER3), chaque demande d'électricité (ER1 ; ER2 ; ER3) étant fournie par un dispositif électronique (01 ; 02 ; 03) ou grâce à une mesure provenant d'un capteur ou grâce à un calcul ou une consultation d'une base de données, ladite demande d'électricité composite (CER) comprenant une demande unique d'électricité ou la somme d'une pluralité de demandes d'électricité et étant déterminée en fonction d'au moins une parmi un groupe de procédures de détermination, ledit groupe comprenant : un calcul, une mesure, une estimation, une détection, une addition desdites demandes d'électricité (ER1 ; ER2 ; ER3) et une lecture à partir d'un dispositif de stockage ; et
- au moins une unité commande (3) permettant de
définir un paramètre de fourniture d'électricité configurable (CEPM) comprenant une quantité configurable d'électricité à délivrer à un consommateur et
délivrer une quantité d'électricité telle que définie dans ledit paramètre de fourniture d'électricité configurable (CEPM) à au moins un dispositif électronique (01 ; 02 ; 03),
le système étant **caractérisé en ce que** chaque demande d'électricité composite (CER) est fournie par un consommateur comprenant au moins un dispositif électronique (01, 02, 03).

11. Système (1) selon la revendication 10, dans lequel le capteur d'électricité composite (2) est agencé de manière à évaluer la demande d'électricité (ER1 ; ER2 ; ER3) d'au moins un dispositif électronique (01 ; 02 ; 03).

12. Système (1) selon la revendication 10 ou 11, dans lequel le capteur d'électricité composite (2) fournit à l'unité de commande (3) au moins un parmi un groupe de paramètres de demande, ledit groupe comprenant : la demande d'électricité (ER1 ; ER2 ; ER3) et la demande d'électricité composite (CER).

13. Système (1) selon l'une quelconque des revendications 10 à 12, dans lequel le capteur d'électricité composite (2) comprend une unité de mesure de qualité d'énergie (PQMU), permettant de mesurer au moins un paramètre de qualité d'électricité de l'électricité disponible parmi une surtension, une sous-tension, une instabilité, une microcoupure et une panne d'électricité.

14. Système (1) selon l'une quelconque des revendications 10 à 13, dans lequel ledit capteur d'électricité composite (2) est un compteur intelligent ou une prise intelligente.

15. Système (1) selon l'une quelconque des revendications 10 à 14, comprenant également un dispositif mobile ou un routeur adapté pour interpréter le paramètre de fourniture d'électricité configurable.

16. Système (1) selon l'une quelconque des revendications 10 à 15, dans lequel ledit dispositif électronique (01 ; 02 ; 03) est un adaptateur intelligent ou un dispositif domestique, par exemple un réfrigérateur, ou un ordinateur personnel domestique.

17. Système (1) selon l'une quelconque des revendications 10 à 16, dans lequel ledit capteur d'électricité composite (2) comprend une première interface de communication (CI1), ladite unité de commande (3) comprend une seconde interface de communication (CI2), la communication entre les première et seconde interfaces de communication (CI1, CI2) étant réalisée par l'intermédiaire d'une connexion sans fil ou d'un câble ou fil physique.

18. Programme informatique conçu pour mettre en oeuvre le procédé selon l'une quelconque des revendications 1 à 9 sur un ordinateur.

19. Support de données qui stocke un programme informatique selon la revendication 18.
